# EUROPEAN PATENT SPECIFICATION

(11) **EP 1 756 478 B1**
(45) Date of publication and mention of the grant of the patent: **14.12.2011**
(21) Application number: 05741131.6
(22) Date of filing: 17.05.2005
(51) Int. Cl.: F24D 17/00, F28F 3/02, A47K 3/00, E03C 1/00

(54) **SPRAY OR SHOWER ARRANGEMENT AND SHOWER INSERT**
SPRÜH- ODER DUSCHANORDNUNG UND DUSCHEINSATZ
SYSTEME DE PULVERISATION OU DE DOUCHE ET PIECE DE DOUCHE INSEREE

(30) Priority: 17.05.2004 SE 0401281; 17.05.2004 US 521534 P
(43) Date of publication of application: 28.02.2007
(73) Proprietor: Cederferm, Joseph, 197 91 Bro (SE)
(72) Inventor: Cederferm, Joseph, 197 91 Bro (SE)
(74) Representative: Lettström, Richard Wilhelm
(86) International application number: PCT/SE2005/000719
(87) International publication number: WO 2005/111511

(56) References cited:
- DE-A1- 2 304 537
- DE-A1- 3 840 534
- GB-A- 2 342 146
- US-A- 4 300 247
- US-A- 4 542 546

## Description

The present invention relates to a spray or shower arrangement as recited in the preamble to the attached Claim 1 and to a shower insert as recited in the preamble to the attached Claim 12.

### BACKGROUND OF THE INVENTION

The present invention relates to the recovery of heat from spent water in showers and other spray arrangements. Significant savings can be made in water heating costs if the heat content from the sprayed water, before it disappears into the drainage system, can be partially transferred to incoming cold water thereby pre-heating it before it is mixed with the incoming hot water, thereby reducing the amount of hot water required to achieve the desired warm water temperature from the shower or spray head.

### BACKGROUND ART

It is known in the art to use a heat exchanger element to pre-heat incoming cold water by extracting heat from the spent water in a shower, for example through DE 44 06 971 A1, EP 0 275 237 A2, DE 33 19 638 A1, DE 37 17 720 A1 and DE 196 08 404 A1, each of which describes a shower system, wherein a heat exchanger is mounted beneath the shower basin. In each of these systems, the spent shower water flows on one side of a heat exchanger before flowing out into the drainage system.

Incoming cold water flows in a convoluted flow path on the other side of the heat exchanger element and is thereby preheated before being mixed in the mixer with the hot water. The channels in each of these background documents are in general of rounded cross section. DE 37 17 720 A1 describes however channels for the incoming cold water which are diamond-shaped in cross section, i. e. squares tipped up 45°.

The spent shower water runs down through the shower floor over these diamond cross section tubes. This heat exchanger arrangement is difficult to construct since it requires individual diamond cross section tubes connected together by end conduits.

EP 0 275 237 describes lens shaped conduits under the shower floor. These conduits provide more heat transferring surface area than a tube of circular cross section but are also difficult to arrange and connect as individual conduits.

A spray and shower arrangement according to the pre-characterizing portion of claim 1 is disclosed in US 4,300,247.

Against the background of this art, the problem addressed by the present invention is to provide a heat exchanging arrangement and/or insert, which is easily and inexpensively manufactured, has a heat exchanger sheet which is thin and provides a greater heat exchanging surface than conventional designs at the same time as it.is capable of withstanding downwardly directed loads.

These and other advantages are achieved according to the invention by an arrangement of the type described in the preamble to Claim 1, which has the features recited in the characterizing clause of Claim 1 and by an insert of the type described in Claim 12.

The rectangle wave form of the metal heat transmitting sheet is compact and at the same time provides extensive surface area for heat transfer. Despite being thin, and thus rapidly and easily transferring heat, it is able to withstand the downward forces which may be applied when it is used in a shower basin or carwash for example.

This is particularly true when the metal sheet is provided with substantially vertical reinforcing ribs.

### Brief Description of the Drawings

The present invention will now be described in more detail with reference made to the accompanying drawings, of which:
Figs. 1 (a), (b) and (c) show a plan view and two perspective views respectively of a shower floor basin,
Figs. 2 (a - g) show different views of a heat exchanger unit mounted under the shower floor basin,
Fig. 3 shows various views of a drain with trap for use in the arrangement,
Fig. 4 shows a schematic perspective view of a part of a metal heat exchanger element provided with vertical ribs.

### Detailed Description

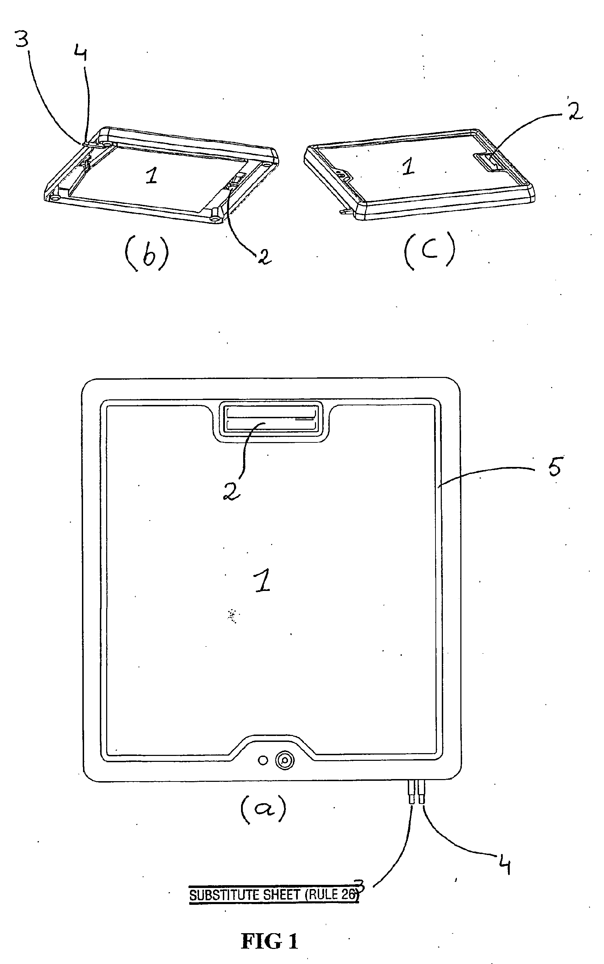

Fig. 1a shows a view from above of a shower floor basin 1 with a drain trap 2 and an inlet 4 and an outlet 3 for incoming cold water. The basin 1 has a gutter 5 in which sprayed water is collected and runs to the drain 2.

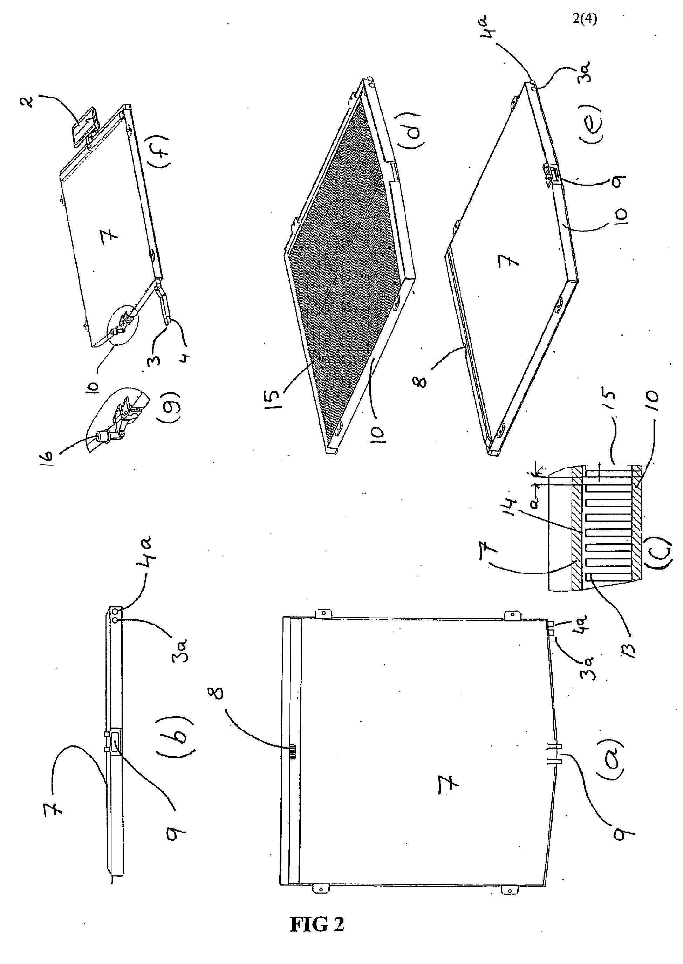

Fig. 2 shows a number of different views of a heat exchanger unit having a bottom 10 and a top 7. Fig. 2a is a view from above and Fig. 2b is an end view showing the drain water outlet 9 and the heat exchanger inlet channel 4a and heat exchanger outlet channel 3a for incoming cold water which is to be pre-heated in the heat exchanger unit. There is a drain heat exchanger inlet 8 receiving spent shower water from Fig. 2 (e) shows a perspective view of the heat exchanger unit with the cover 7 on and Fig. 2 (d) shows the same unit with the cover 7 off, revealing the heat exchanger element in the form of a metal sheet 15, which is formed with a rectangle wave cross section as can be seen in Fig. 2(c) which is a cross section on a much larger scale of a portion of the heat exchanger unit.

The rectangle-wave metal sheet 15 as seen in Fig. 2(c) has a very thin thickness and is therefore able to transmit heat energy rapidly and efficiently. The wave has relatively long vertical portions 13 and relatively short horizontal portions 14 of dimension a. Before arriving at the shower mixer cold incoming water is led through the inlet 4 into the inlet channel 4a to the far end proximate the drain heat exchanger inlet 8 and flows through the channels on the underside of the sheet metal element 15, absorbing the heat of the spent shower water on the other side of the element, before exiting through channel 3a and outlet 3, from where it flows pre-heated to a conventional shower mixer where some additional hot water is mixed in to bring the water exiting the shower head to the desired comfortable temperature.

Fig. 2(f) shows a push-button cut-off valve 16, which is manually actuated at periodic intervals when the heat exchanger drain path is to be disinfected, by filing it with disinfectant through the drain 2, and allowing the disinfectant to stand for a period in the heat exchanger, before the push-button is actuated again to open the drain path and allow the disinfectant solution to be flushed out. The push-button cut-off valve 16 is shown enlarged in Fig. 2(g).

By virtue of the fact that the heat exchanger element is made of such thin sheet metal, after the shower is turned off and the spent water runs out of the heat exchanger and into the sewage system, the sheet metal will cool very rapidly since there will be cold water on one side of the metal sheet and air on the other side. This reduction in temperature will inhibit the growth of bacteria. Optionally, after the shower is shut off, a valve opening into the basin near the drain may open and allow cold water to run for a few seconds thereby effectively cooling off the system. This valve may also be set to open periodically to flush the system with new cold water if the shower is not used for longer periods of time.

To kill bacteria it is also possible to apply a voltage, which will not be noticed by or affect the shower occupant, between the cold water inlet and outlet.

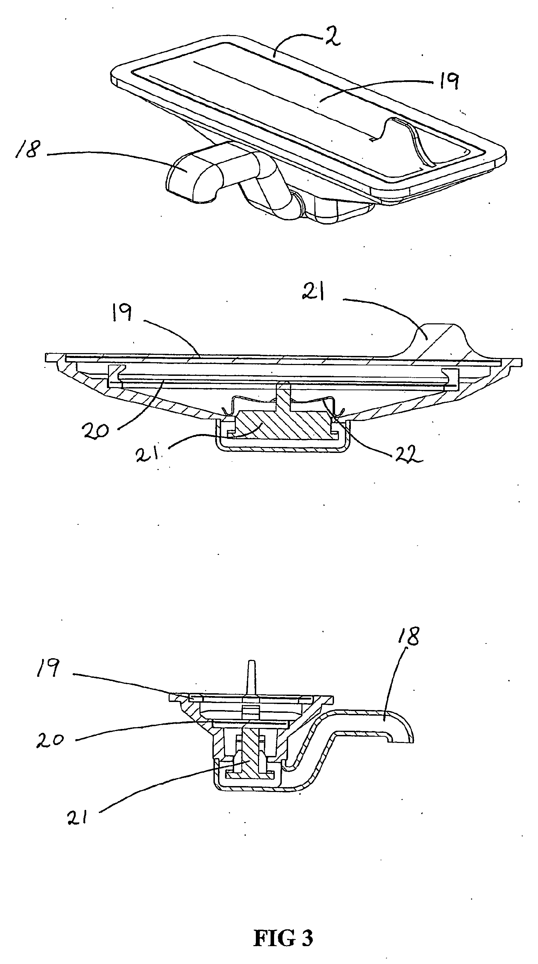

Fig. 3(a) is a perspective view in more detail of the trap drain 2 shown in Figs. 1 and 2. The trap outlet 18 is at a higher level than the base of the drain to for a water trap so that sewage smells cannot wander back up and out into the bathroom. The trap drain 2 has a first filter 19 which can be removed for cleaning or replacement by means of the tab 21. A second filter 20 is disposed below the first filter 19. If the second filter 20 is removed, the spring 22 will move the plug 21 upwards to close off the drain. This will protect the heat exchanger from being used without a filter protecting the heat exchanger from becoming clogged with soap and shampoo residue, hair and skin remnants and other contaminants which might otherwise cause a sanitary problem.

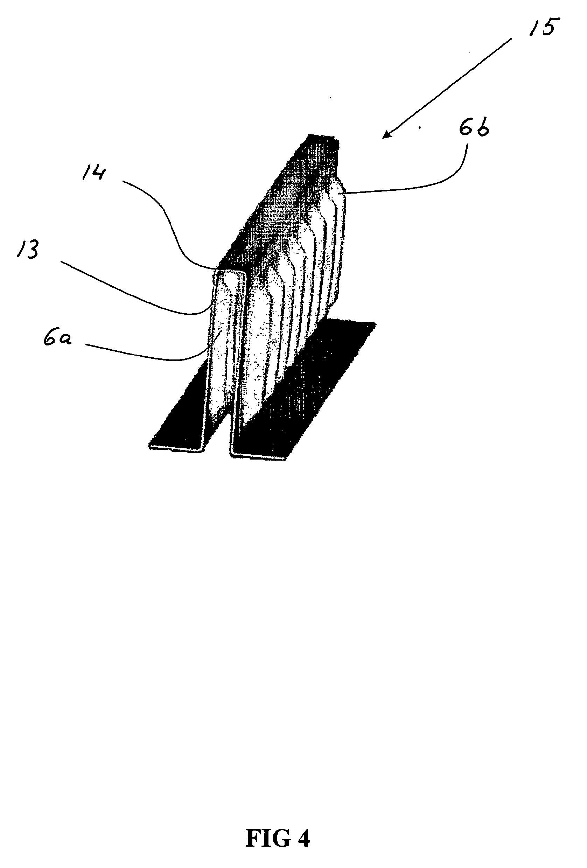

Fig. 4 shows a schematic perspective representation of a further advantageous embodiment of the rectangle wave shaped heat exchanger element. Only one wave length is shown. The vertical portions 13 are each embossed with ribs 6a, 6b while the metal sheet is still flat before the metal sheet is bent into it final shape. The vertical ribs are in the form of depressions which are all directed to the right in figure. The rows of ribs are all arranged in direct alignment with each other so as to create a meandering zig-zag path for water on either side of the sheet. This increases the heat transfer surface significantly and at the same time strengthens the heat exchanger element for vertical downward loading. The heat exchanger element can still be made of thin sheet metal.

The person skilled in the art will of course recognize that the invention defined in the attached claims can also be realized in a number of different applications where the recover of heat from spent water is desired, such as many types of hot shower arrangements including car-washes.

The present invention can also be implemented in the form of a prefabricated insert which can be installed in existing showers or car-washes for example, connecting to the existing cold water and drain lines.

## Claims

1. Spray or shower arrangement with heat recovery comprising:
(a) a cold water-hot water mixer leading to
(b) at least one spray head,
(c) a cold water delivery line to said spray head mixer,
(d) a hot water delivery line to said spray head mixer,
(e) a basin (1) for collecting water sprayed from said spray head,
(f) at least one heat exchanger element (15) disposed beneath said basin for transferring heat from said collected sprayed water to water in said cold water delivery line to pre-heat the same,
said heat exchanger element further comprising a metal sheet of substantially rectangle waveform cross section comprising alternating vertical (13) and horizontal(14) panels, said collected sprayed water from said shower head flowing on one side of said metal sheet and water in said cold water delivery line flowing on the other side thereof for pre-heating, **characterized in that** said substantially vertical panels (13) are each embossed with a row of ribs (6a, 6b) being all directed in direct alignment with each other.

2. Arrangement according to claim 1, **characterized in that** said reinforcing ribs (6a, 6b) are created by depressions stamped into each vertical panel (13) of the metal sheet.

3. Arrangement according to claim 2, **characterized in that** all of the stamped depressions creating said reinforcing ribs are directed in the same direction and that each series of reinforcing ribs is in direct alignment with every other series, thereby creating a meandering path for water flowing on either side of the metal sheet (15).

4. Arrangement according to claim 1, **characterized in that** said collected sprayed water flows on top of said metal sheet and cold water under pressure flows on the underside of said metal sheet.

5. Arrangement according to one of the preceding claims, **characterized in that** the heat exchanger element comprises a plurality of metal sheets of rectangle waveform cross section stacked on top of each other.

6. Arrangement according to one of the preceding claims, **characterized by** a drain trap (2) upstream of the heat exchanger element.

7. Arrangement according to claim 6, **characterized in that** said drain trap has at least one filter (20) and valve means (21) disposed to automatically shut off drainage if the filter (20) is not in place.

8. Arrangement according to one of the preceding claims, **characterized in that** the arrangement is part of a bathroom shower installation or of a carwash.

9. Arrangement according to one of the preceding claims, **characterized in that** the metal sheet(s) support(s) said basin when it is subjected to downward pressure.

10. Arrangement according to one of the preceding claims, **characterized by** a shut-off valve (16) at the drainage outlet from the heat exchanger element.

11. Arrangement according to one of the preceding claims, **characterized by** an automatic valve opening for short time period to flush the system with cold water either immediately upon shutting off the spray head or intermittently when the spray or shower arrangement stands unused.

12. Insert for use as a spray or shower arrangement according to one of the preceding claims.

## Patentansprüche

1. Sprüh- oder Duschanordnung mit Wärmewiedergewinnung, umfassend:
(a) einen Kaltwasser-Heißwasser-Mischer, der zu
(b) zumindest einem Sprühkopf führt,
(c) eine Kaltwasserversorgungsleitung zu dem Sprühkopfmischer,
(d) eine Heißwasserversorgungsleitung zu dem Sprühkopfmischer,
(e) ein Becken (1) zum Sammeln des von dem Sprühkopf gesprühten Wassers,
(f) zumindest ein Wärmetauscherelement (15), das unter dem Becken angeordnet ist, um Wärme von dem gesammelten Sprühwasser auf Wasser in der Kaltwasserversorgungsleitung zu übertragen, um diese vorzuwärmen,
worin das Wärmetauscherelement ferner ein Metallblech mit im Wesentlichen rechtwinkligem, wellenförmigem Querschnitt aufweist, das abwechselnd vertikale (13) und horizontale (14) Tafeln aufweist, wobei das gesammelte Sprühwasser von dem Duschkopf an einer Seite des Metallblechs fließt und Wasser in der Kaltwasserversorgungsleitung an der anderen Seite davon zur Vorwärmung fließt,
**dadurch gekennzeichnet, dass** die im Wesentlichen vertikalen Tafeln (13) jeweils mit einer Reihe von Rippen (6a, 6b) geprägt sind, die alle in direkter Ausrichtung zueinander ausgerichtet sind.

2. Anordnung nach Anspruch 1, **dadurch gekennzeichnet, dass** die Verstärkungsrippen (6a, 6b) durch Vertiefungen erzeugt sind, die in jede vertikale Tafel (13) des Metallblechs gestanzt sind.

3. Anordnung nach Anspruch 2, **dadurch gekennzeichnet, dass** alle der gestanzten Vertiefungen, welche die Verstärkungsrippen erzeugen, in der gleichen Richtung ausgerichtet sind, und dass jede Serie von Verstärkungsrippen in direkter Ausrichtung mit jeder anderen Serie ist, um hierdurch einen mäandrierenden Weg für Wasser zu erzeugen, das an jeder Seite des Metallblechs (15) fließt.

4. Anordnung nach Anspruch 1, **dadurch gekennzeichnet, dass** das gesammelte Sprühwasser an der Oberseite des Metallblechs fließt und Kaltwasser unter Druck an der Unterseite des Metallblechs fließt.

5. Anordnung nach einem der vorhergehenden Ansprüche, **dadurch gekennzeichnet, dass** das Wärmetauscherelement eine Mehrzahl von Metallblechen mit rechteckigem, wellenförmigem Querschnitt aufweist, die aufeinander gestapelt sind.

6. Anordnung nach einem der vorhergehenden Ansprüche, **gekennzeichnet durch** eine Ablauffalle (2) stromauf des Wärmetauscherelements.

7. Anordnung nach Anspruch 6, **dadurch gekennzeichnet, dass** die Ablauffalle zumindest einen Filter (20) und Ventilmittel (21) aufweist, die angeordnet sind, um die Drainage automatisch abzusperren, wenn der Filter (20) nicht am Platz ist.

8. Anordnung nach einem der vorangehenden Ansprüche, **dadurch gekennzeichnet, dass** die Anordnung Teil einer Badezimmer-Duschinstallation oder einer Autowaschanlage ist.

9. Anordnung nach einem der vorangehenden Ansprüche, **dadurch gekennzeichnet, dass** das Metallblech oder die Metallbleche das Becken stützt oder stützen, wenn es oder sie einem abwärtigen Druck ausgesetzt ist oder sind.

10. Anordnung nach einem der vorangehenden Ansprüche, **gekennzeichnet durch** ein Absperrventil (16) an dem Drainageauslass von dem Wärmetauscherelement.

11. Anordnung nach einem der vorangehenden Ansprüche, **gekennzeichnet durch** ein automatisches Ventil, das für eine kurze Zeitdauer öffnet, um das System mit Kaltwasser zu spülen, entweder unmittelbar nach dem Abschalten des Sprühkopfs oder intermittierend, wenn die Sprüh- oder Duschanordnung unbenutzt bleibt.

12. Einsatz zur Verwendung als Sprüh- oder Duschanordnung gemäß einem der vorangehenden Ansprüche.

## Revendications

1. Agencement de pulvérisateur ou de douche avec récupération de chaleur comprenant :
(a) un mélangeur d'eau froide - eau chaude conduisant à
(b) au moins une tête de pulvérisation,
(c) une conduite d'alimentation du mélangeur de tête de pulvérisation en eau froide,
(d) une conduite d'alimentation du mélangeur de tête de pulvérisation en eau chaude,
(e) un bac (1) pour la collecte de l'eau pulvérisée à partir de ladite tête de pulvérisation,
(f) au moins un élément échangeur de chaleur (15) disposé sous ledit bac pour transférer la chaleur de ladite eau pulvérisée recueillie vers l'eau présente dans ladite ligne de distribution d'eau froide pour préchauffer cette dernière,
ledit élément échangeur de chaleur comprenant en outre une tôle ayant, en section transversale, une forme d'onde rectangulaire comportant des panneaux alternativement verticaux (13) et horizontaux (14), ladite eau pulvérisée recueillie à partir de ladite pomme de douche s'écoulant sur un côté de ladite tôle et l'eau présente dans ladite conduite d'alimentation en eau froide s'écoulant de l'autre côté de celle-ci pour le préchauffage, **caractérisé en ce que** lesdits panneaux sensiblement verticaux (13) comprennent chacun, emboutis sur eux, une rangée de nervures (6a, 6b) toutes dirigées en alignement direct les unes avec les autres.

2. Agencement selon la revendication 1, **caractérisé en ce que** lesdites nervures de renforcement (6a, 6b) sont créées par des dépressions embouties dans chaque panneau vertical (13) de tôle.

3. Agencement selon la revendication 2, **caractérisé en ce que** toutes les dépressions embouties créant lesdites nervures de renforcement sont dirigées dans la même direction et **en ce que** chaque série de nervures de renforcement est en alignement direct avec toutes les autres séries, créant ainsi un chemin sinueux pour l'eau s'écoulant sur les deux côtés de la tôle (15).

4. Agencement selon la revendication 1, **caractérisé en ce que** ladite eau pulvérisée recueillie s'écoule sur le dessus de ladite tôle et l'eau froide sous pression s'écoule sur le dessous de ladite tôle.

5. Agencement selon l'une des revendications précédentes, **caractérisé en ce que** l'élément échangeur de chaleur comprend une pluralité de tôles ayant en section transversale une forme d'onde rectangulaire, empilées les unes sur le dessus des autres.

6. Agencement selon l'une des revendications précédentes, **caractérisé par** un siphon (2) en amont de l'élément échangeur de chaleur.

7. Agencement selon la revendication 6, **caractérisé en ce que** ledit siphon a au moins un filtre (20) et des moyens (21) formant soupape disposés pour couper automatiquement le drainage si le filtre (20) n'est pas en place.

8. Agencement selon l'une des revendications précédentes, **caractérisé en ce que** l'agencement fait partie d'une installation de douche de salle de bain ou d'un lave-automobile.

9. Agencement selon l'une des revendications précédentes, **caractérisé en ce que** la (les) tôle(s) supporte(nt) ledit bac lorsqu'il est soumis à une pression réduite.

10. Agencement selon l'une des revendications précédentes, **caractérisé par** une vanne d'arrêt (16) à la sortie de collecte de l'élément échangeur de chaleur.

11. Agencement selon l'une des revendications précédentes, **caractérisé par** une ouverture automatique de la vanne pour une courte période de temps pour rincer le système avec de l'eau froide soit immédiatement après fermeture de la tête de pulvérisation ou par intermittence lorsque l'agencement de pulvérisation ou de douche est inutilisé.

12. Insert destiné à être utilisé en tant qu'agencement de pulvérisation ou de douche selon l'une des revendications précédentes.
